# EUROPÄISCHE PATENTSCHRIFT

(11) **EP 2 286 654 B1**
(45) Veröffentlichungstag und Bekanntmachung des Hinweises auf die Patenterteilung: **14.03.2012**
(21) Anmeldenummer: 10170243.9
(22) Anmeldetag: 21.07.2010
(51) Int. Cl.: A01D 41/12, A01F 12/40

(54) **Erntegutrestehäcksel- und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 20.08.2009 DE 102009028764
(43) Veröffentlichungstag der Anmeldung: 23.02.2011
(73) Patentinhaber: DEERE & COMPANY, Moline, Illinois 61265-8098 (US)
(72) Erfinder: Weichholdt, Dirk, 57200, Woelfling les Sarreguemin (FR); Klein, Oliver, 66740, Saarlouis (DE); Pearson, Mark L., Le Claire, IA 52753 (US)
(74) Vertreter: Holst, Sönke

(56) Entgegenhaltungen:
- WO-A1-03/071857
- WO-A1-2008/156419

## Beschreibung

Die Erfindung betrifft eine Erntegutrestehäcksel- und -verteilanordnung für einen Mähdrescher.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende Wurfpaddel umfassen, sind zu Zwecken einer richtungsänderungslosen Gutübergabe in einer Ebene angeordnet. Um die Wurfgebläse herum sind Ummantelungen angebracht, die sich zwischen den Wurfgebläsen in einer vorderen, dem Strohhäcksler zugewandten Spitze vereinigen. Im rückwärtigen Bereich sind die Ummantelungen ausgebrochen, um das Stroh auf das Feld abzugeben. Oberhalb der Wurfgebläse befindet sich eine Abdeckung, während an ihrer Unterseite keine Abdeckung vorhanden ist.

In der US 2007/0015556 A1 wird ein Mähdrescher mit einem Strohhäcksler beschrieben, bei dem der Auslass des Strohhäckslers die nachfolgenden Wurfgebläse von unten her an ihrem Umfang unter einem spitzen Winkel beaufschlagt. Oberhalb der Wurfgebläse befindet sich eine Abdeckung, während an ihrer Unterseite keine Abdeckung vorhanden ist.

Die DE 10 2007 037 485 B3 zeigt einen Mähdrescher, bei dem der Strohhäcksler die Erntegutreste im freien Flug abgibt und die Wurfgebläse in axialer Richtung unter einem spitzen Winkel beaufschlagt.

Die WO 2008/156419 A1 beschreibt eine ähnliche Anordnung des Strohhäckslers und Wurfgebläses, jedoch wird der Erntegutstrom stromab des Strohhäckslers durch ein Umlenkblech abgelenkt, so dass er in axialer Richtung, jedoch unter einem relativ spitzen Winkel auf das Wurfgebläse trifft. Dabei wird der mittlere Teil des Erntegutresteflusses weniger stark abgelenkt als der äußere Teil, um zu erreichen, dass die nach dem Verlassen des Strohhäckslers bereits vorhandene Geschwindigkeit der zu verteilenden Erntegutreste in einem möglichst hohen Maße ausgenutzt wird, indem die mit ihren Vorderseiten nach innen drehenden Wurfgebläse vor der Drehachse mit dem äußeren Teil des Erntegutresteflusses beaufschlagt werden, während der mittlere Teil des Erntegutresteflusses im Bereich rückwärtig der Drehachse gegen die Wurfgebläse geworfen wird. Die Wurfgebläse sind in Gehäusen angeordnet, die an ihrer axialen, beschickungsseitigen Stirnfläche, abgesehen von den Umlenkblechen, offen und an der anderen Stirnfläche geschlossen sind.

Im erwähnten Stand der Technik umfassen die Wurfgebläse an mittigen Wellen montierte Wurfpaddel, deren vorlaufende Flächen in sich flach sind und sich in radialer Richtung nach außen bis zum Rand des Wurfgebläses und axialer Richtung über die gesamte Länge der Welle erstrecken. Es ist jeweils eine Anzahl von Wurfpaddeln um die Welle verteilt.

Während bei den Wurfgebläsen gemäß DE 199 08 111 C1, US 2007/0015556 A1 und DE 10 2007 037 485 B3 zwischen dem Auslass des Gehäuses des Strohhäckslers und den Wurfgebläsen relativ große Spalte verbleiben, durch welche die vom Strohhäcksler aus dem Innenraum des Mähdreschers heran geförderte, insbesondere vom Reinigungsgebläse kommende Luft nach außen entweichen kann, muss diese Luft bei den Wurfgebläsen nach WO 2008/156419 A1 komplett durch die Wurfpaddel abgefördert werden, da der Erntegutstrom zwischen dem Strohhäcksler und den Wurfgebläsen durch die Umlenkbleche geführt wird und kein Spalt nach außen hin verbleibt. Dadurch ergeben sich oft Förderprobleme, denn die Erntegutreste werden aufgrund des sich am Eingang des Wurfgebläses bildenden, hohen Luftdrucks nicht immer in gewünschter Weise abgefördert. Der hohe Luftdruck kann sich bis zur Reinigungseinrichtung des Mähdreschers ausbreiten und auch dort unbefriedigende Leistungen zur Folge haben.

### Aufgabe der Erfindung

Die der Erfindung zu Grunde liegende Aufgabe wird darin gesehen, eine Erntegutrestehäcksel- und -verteilanordnung mit einem Strohhäcksler und mindestens einem stromab des Strohhäckslers angeordneten Wurfgebläse für einen Mähdrescher bereitzustellen, bei der die erwähnten Probleme vermieden werden oder zumindest in vermindertem Umfang vorliegen.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Emtegutrestehäcksel- und -verteilanordnung für einen Mähdrescher umfasst einen Strohhäcksler und wenigstens ein bezüglich der Gutflussrichtung stromab des Strohhäckslers angeordnetes Wurfgebläse. Im Emtebetrieb zerkleinert der Strohhäcksler ihm zugeführte Erntegutreste, insbesondere Stroh. Er kann mit seinen Messern und ggf. zusätzlichen Förderpaddeln auch andere Erntegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese Emtegutreste. Die vom Strohhäcksler heran geförderten Erntegutreste werden durch das Wurfgebläse angenommen und über das Feld verteilt. Das Wurfgebläse weist um eine Drehachse in Drehung versetzbare Wurfpaddel auf, die sich in axialer Richtung nur jeweils über einen Teil der axialen Abmessung des Wurfgebläses erstrecken. Benachbarte, in Umfangsrichtung winkelversetzte Wurfpaddel sind in axialer Richtung jeweils versetzt angeordnet.

Auf diese Weise wird das Durchlassvermögen des Wurfgebläses für Luft verbessert, denn die Wurfpaddel erstrecken sich nicht über die gesamte Höhe des Wurfgebläses, so dass in ihrer Nachbarschaft ein Spalt verbleibt, durch den die vom Strohhäcksler heran geförderte Luft abfließen kann. Die Förderleistung für Erntegut wird nicht beeinträchtigt, denn benachbarte Wurfpaddel sind in axialer Richtung versetzt angebracht, so dass weiterhin die gesamte axiale Abmessung des Wurfgebläses mit Wurfpaddeln ausgestattet werden kann. Die Luft kann somit in der Mitte der axialen Abmessung des Wurfgebläses über einen kurvenförmigen Weg zwischen den Wurfpaddeln hindurch abströmen.

Die Wurfpaddel erstrecken sich in axialer Richtung vorzugsweise über zumindest etwa die Hälfte der axialen Abmessung des Wurfgebläses. Jeweils ein axiales Ende der Wurfpaddel kann bündig mit dem Wurfgebläse abschließen und sich beispielsweise bis zum axialen Ende einer mittigen Welle erstrecken, an die sich die Wurfpaddel in radialer Richtung anschließen.

Vorzugsweise sind zwei Wurfgebläse seitlich nebeneinander angeordnet, die gegensinnig rotieren. Die Drehrichtung ist beliebig, wobei sich jedoch bewährt hat, dass sich die dem Strohhäcksler zugewandten Bereiche der Wurfgebläse im Betrieb jeweils nach innen drehen.

Hinsichtlich der relativen Anordnung von Strohhäcksler und Wurfgebläse zueinander bestehen im Rahmen des erfindungsgemäßen Gedankens unterschiedliche Möglichkeiten. So kann der Strohhäcksler das Wurfgebläse in exakt radialer Richtung beaufschlagen (vgl. DE 199 08 111 C1) oder den radial äußeren Rand des Wurfgebläses unter einem spitzen oder stumpfen Winkel (s. US 2007/0015556 A1 ) oder die Erntegutreste werden dem Wurfgebläse in axialer Richtung unter einem spitzen oder stumpfen Winkel, mit (s. WO 2008/156419 A1) oder ohne (s. DE 10 2007 037 485 B3) Umlenkung der Erntegutreste stromab des Strohhäckslers durch ein Ablenkelement zugeführt. Dabei kann zwischen dem Strohhäcksler und dem Wurfgebläse ein zur Umgebung offener Spalt verbleiben, oder es wird ein Erntegutresteführungselement zwischen dem Auslass des mit einem konkaven Boden ausgestatteten Strohhäckslergehäuse und dem Wurfgebläse angebracht, das als reines Führungselement ausgebildet sein kann und den Emtegutrestestrom nicht ablenkt, oder ihn in einer gewünschten Richtung ablenkt, wie sie insbesondere in der WO 2008/156419 A1 beschrieben wird.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses,
- Fig. 3: eine Draufsicht auf den Strohhäcksler und die Wurfgebläse,
- Fig. 4: eine perspektivische Ansicht eines Erntegutresteführungselements, und
- Fig. 5: eine perspektivische Ansicht eines Drehtellers der Wurfgebläse mit Wurfpaddeln.

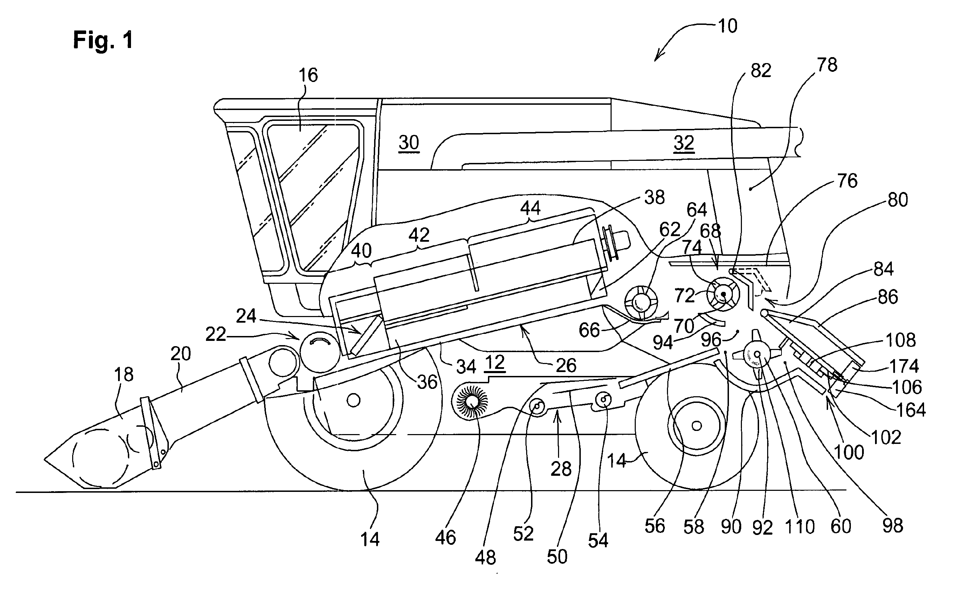

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Emtegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die Emtegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Emtegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Emtegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, pendelnd aufgehängten Häckselmessem 96 zusammensetzt. Am Rotor 92 können auch zusätzliche Wurfpaddelpaddel (nicht gezeigt) befestigt werden, oder einige oder alle Häckselmesser 96 umfassen Wurfpaddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, 102', die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

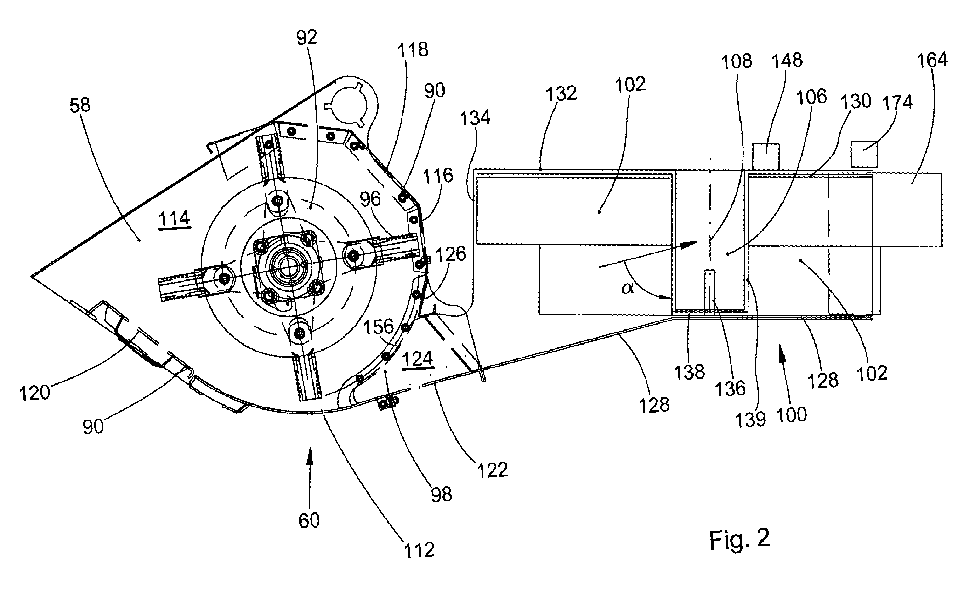

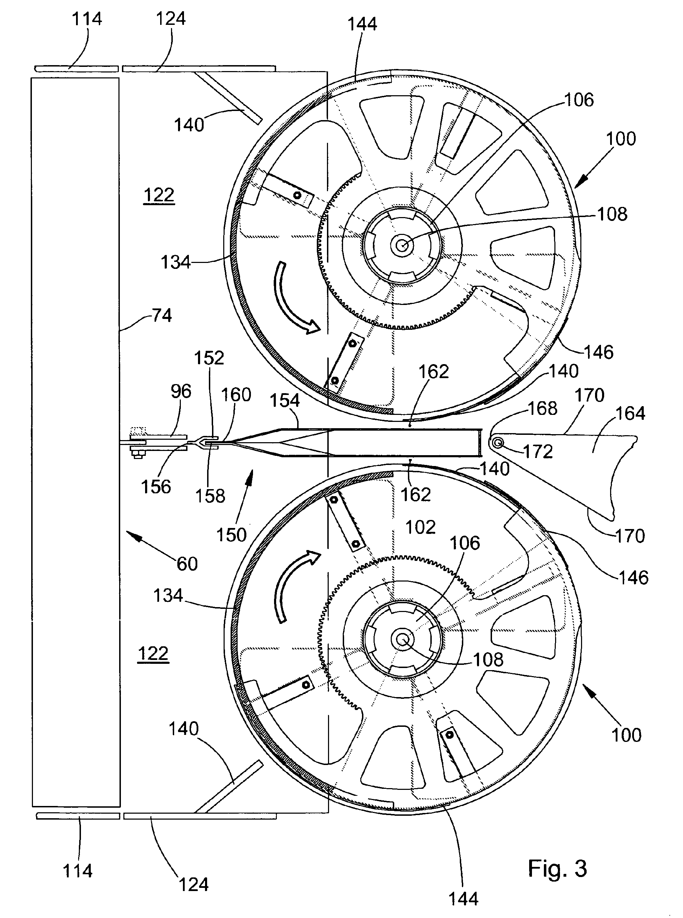

Es wird nun auf die Figuren 2 und 3 verwiesen, in welcher die Emtegutrestehäcksel- und -verteilanordnung des Mähdreschers 10 in einer Seitenansicht (Figur 2) und einer Draufsicht (Figur 3) dargestellt ist. Die Emtegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 74 umschließen. Der Boden 112 ist an der Unterseite des Strohhäckslergehäuses 90 angeordnet und umschließt den von den Häckselmessem 96 definierten Hüllkreis kreisbogenförmig in einem relativ geringen Abstand mit einem Radius. Es können auch Gegenmesser (nicht dargestellt) vorgesehen sein, die am Strohhäckslergehäuse 90 befestigt werden und in den Hüllkreis der Häckselmesser 96 eindringen, um die Erntegutreste effektiv zu zerkleinern.

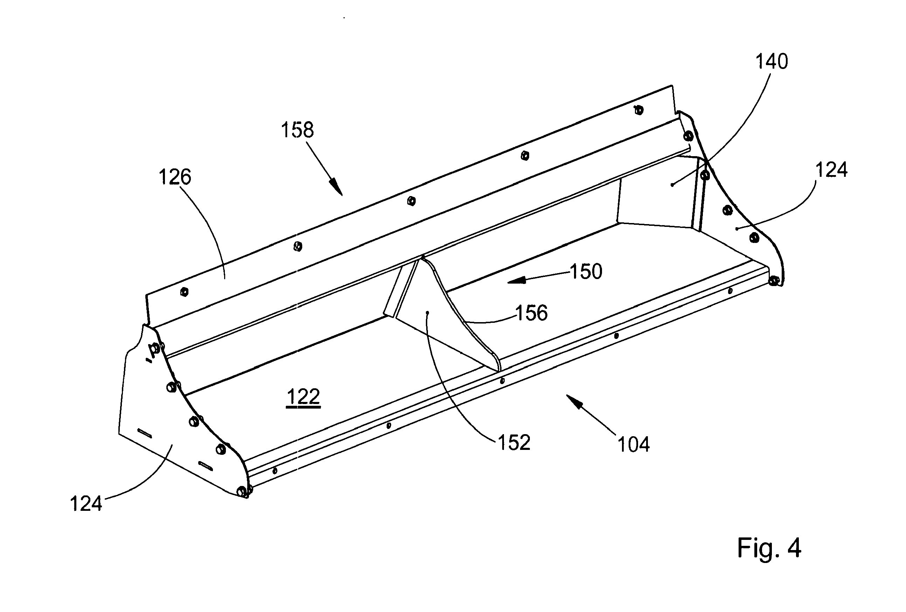

An den Boden 112 schließt sich in der Flussrichtung der Erntegutreste ein Erntegutresteführungselement 122 an, das in der Figur 4 in einer perspektivischen Ansicht dargestellt ist. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Erntegutresteführungselement 122 ist in sich eben (hat demnach einen Radius von ∞). Das Erntegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Erntegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. Es sei noch angemerkt, dass das Erntegutresteführungselement 122 einteilig mit dem Boden 112 hergestellt werden könnte, wie auch die Seitenwandverlängerungen 124 einteilig mit den Seitenwänden 114 hergestellt werden könnten. Die dargestellte, zweiteilige Ausführungsform kann jedoch den Strohhäcksler 60 ohne Erntegutresteführungselement 122 und Seitenwandverlängerungen 124 (oder mit einem anderen Erntegutresteführungselement und anderen Seitenwandverlängerungen, nicht gezeigt) in Kombination mit einem Verteilerboden mit verstellbaren Leitblechen verwenden.

An den Seitenwandverlängerungen 124 (s. Figur 4) sind äußere Leitelemente 140 befestigt, die sich unter einem Winkel von etwa 45° nach innen und hinten erstrecken. Sie sind in der Draufsicht rechteckig und können über ihre ganze Länge oder nur in ihrem vorderen Bereich, der sich an einen mit der Seitenwandverlängerung 124 verbundenen, parallel zu ihr erstreckenden Bereich anschließt, gekrümmt sein. In vertikaler Richtung sind die äußeren Leitelemente 140 flach. Es wäre auch möglich, die äußeren Leitelemente 140 zusätzlich oder ausschließlich am Erntegutresteführungselement 122 zu befestigen. Auch könnten sie in der Art eines Pflugschars oder einer Kufe geformt sein.

An der Unterseite der Wurfgebläse 100 ist ein abgewinkeltes Bodenblech 128 angeordnet, das sich von einer Position kurz vor den Drehachsen bis an das rückwärtige Ende der Wurfgebläse erstreckt. Das Bodenblech 128 weist einen vorderen Abschnitt auf, der sich in der Ebene des Emtegutresteführungselements 122 erstreckt und mit einem nach unten abgewinkelten Flansch an einem nach unten abgewinkelten Flansch des Erntegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Der vordere Abschnitt des Bodenblechs 128 erstreckt sich vom besagten Flansch bis kurz vor die Drehachse 108 der Wurfgebläse 100 und geht dort in einen rückwärtigen Abschnitt über, der sich bis unter das rückwärtige Ende der Wurfgebläse 100 und orthogonal zur Drehachse 108 erstreckt.

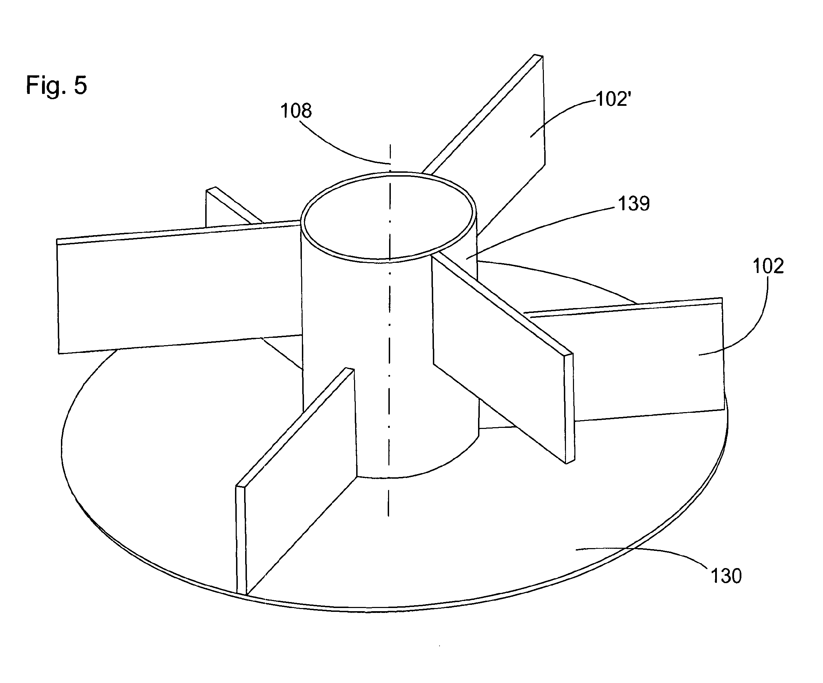

Es wird nun auf die Figuren 2 und 5 verwiesen, wobei die Figur 5 eine perspektivische Ansicht der Wurfpaddel 102, 102' eines Wurfgebläses 100 und ihrer Anbringung von unten her zeigt, d. h. das Wurfgebläse 100 ist gegenüber der Figur 2 umgedreht worden. Die unten liegenden Ausgangswellen 136 der am Deckel 132 befestigten Hydromotoren 106 treiben die Wurfpaddel 102,102' über eine Querverbindung 138 und eine zylindrische Welle 139 an, die an ihrem oberen Ende an einem Teller 130 mit einer mittleren Öffnung befestigt ist. Die Wurfpaddel 102, 102' der Wurfgebläse 100 erstrecken sich jeweils genau über die Hälfte der axialen Abmessung der Welle 139 und in Umfangsrichtung aufeinander folgende, in der dargestellten Ausführungsform jeweils um 60° versetzte Wurfpaddel 102, 102' sind in axialer Richtung versetzt angeordnet. Die oberen Wurfpaddel 102 liegen mit ihren Oberseiten am Teller 130 an oder sind daran befestigt (z. B. angeschweißt). Die unteren Wurfpaddel 102' sind nur an der Welle 139 befestigt (z. B. angeschweißt) und schließen mit ihren Unterkanten bündig mit der Welle 139 ab.

Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vom radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand vom Hüllkreis der Häckselmesser 96 angeordnet ist. An seiner Rückseite bildet der vordere Teil 152 einen Schlitz 158, in der ein flaches, vorderes Blech 158 des rückwärtigen Teils 154 eindringt. Rückwärtig des vorderen Blechs 158 verbreitert sich der rückwärtige Teil 154 und ist in sich hohl. Der rückwärtige Teil 154 ist an der Unterseite des Deckels 132 und an der Oberseite des Bodenblechs 128 befestigt, welche mit den Teilummantelungen 134, 140 und den Abschirmungen 144, 146 ein Wurfgebläsegehäuse bilden.

Anhand der Figur 3 ist erkennbar, dass zwischen dem Leitelement 150 und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Erntegutrestestroms vom Strohhäcksler 60 nach hinten hindurch bis auf das Feld strömen kann.

Rückwärtig des rückwärtigen Teils 154 des Leitelements 150 ist ein bewegliches Führungselement 164 vorgesehen mit einer vorderen Spitze 168, die sich rückwärtig der Drehachsen 108 der Wurfgebläse 100 in deren Zwickelbereich befindet, und zwei divergierenden, seitlichen, geraden Wänden 170, die jeweils einem Wurfgebläse 100 benachbart angeordnet sind. Das bewegliche Führungselement 164 ist um eine vorn liegende Achse 172, die sich parallel zur Drehachse 108 der Wurfgebläse 100 erstreckt, durch einen oberhalb des Deckels 132 rückwärtig der Hydraulikmotoren 106 angebrachten Antrieb 174 in eine Schwingbewegung versetzbar. Hierzu wird auf die DE 10 2007 037 485 B3 und die DE 10 2008 055 003 A1 verwiesen, deren Offenbarung durch Verweis mit in die vorliegenden Unterlagen aufgenommen wird.

Die Teilummantelungen 140 sind mit einem höheren, rückwärtigen Abschnitt und einem niedrigeren, vorderen Abschnitt ausgestattet, zwischen denen ein schräg ansteigender Bereich vorgesehen ist.

Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 68 kontrollierten Verstellantriebs 148 an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

Nach alledem ergibt sich folgende Funktion der Erntegutrestehäcksel- und -verteilanordnung im Erntebetrieb. Die aus Kaff und bei in der Figur 1 eingezeichneter Stellung stehender Klappe 80 aus Stroh bestehenden Erntegutreste gelangen durch den Einlass 58 in den Strohhäcksler 60 und werden dort, ggf. im Zusammenwirken mit (nicht eingezeichneten Gegenmessern) durch die Häckselmesser 96 zerkleinert und durch den Auslass 98 ausgeworfen. Die Erntegutreste strömen oberhalb des Emtegutresteführungselements 122 entlang und treffen unter einem Winkel α von etwa 55° gegenüber der Drehachse 108 der Wurfgebläse 100 auf deren Wurfpaddel 102, 102'. Die axial versetzte Anordnung der Wurfpaddel 102, 102' hat den Vorteil, dass zwischen dem Teller 130 und den unteren Wurfpaddeln 102' und zwischen den Bodenblech 128 und den oberen Wurfpaddeln 102 jeweils relativ große Lücken verbleiben, durch die vom Gebläse 46 und vom Strohhäcksler 60 heran geförderte Luft auf einem etwa mäanderförmigen Weg problemlos abströmen kann. Dadurch vermeidet man Förderprobleme der Erntegutreste durch sich im Bereich zwischen dem Strohhäcksler 60 und den Wurfgebläsen 100 aufstauende Luft.

## Patentansprüche

1. Emtegutrestehäcksel- und -verteilanordnung mit einem Strohhäcksler (60) und wenigstens einem stromab des Strohhäckslers (60) angeordneten Wurfgebläse (100), das um eine Drehachse (108) in Drehung versetzbare Wurfpaddel (102, 102') umfasst, **dadurch gekennzeichnet, dass** die Wurfpaddel (102, 102') sich in axialer Richtung nur jeweils über einen Teil der axialen Abmessung des Wurfgebläses (100) erstrecken, und dass benachbarte, in Umfangsrichtung winkelversetzte Wurfpaddel (102, 102') jeweils in axialer Richtung versetzt angeordnet sind.

2. Emtegutrestehäcksel- und -verteilanordnung nach Anspruch 1, **dadurch gekennzeichnet, dass** die Wurfpaddel (102, 102') sich in axialer Richtung über zumindest näherungsweise die Hälfte der axialen Abmessung des Wurfgebläses (100) erstrecken.

3. Erntegutrestehäcksel- und -verteilanordnung nach Anspruch 1 oder 2, **dadurch gekennzeichnet, dass** jeweils ein axiales Ende der Wurfpaddel (102, 102') bündig mit dem Wurfgebläse (100) abschließt.

4. Erntegutrestehäcksel- und -verteilanordnung nach einem der Ansprüche 1 bis 3,
**dadurch gekennzeichnet, dass** das Wurfgebläse (100) mit einer mittigen Welle (139) ausgestattet ist, an die sich die Wurfpaddel (102, 102') in radialer Richtung anschließen.

5. Erntegutrestehäcksel- und -verteilanordnung nach einem der Ansprüche 1 bis 4,
**dadurch gekennzeichnet, dass** zwei seitlich nebeneinander angeordnete, gegensinnig drehende Wurfgebläse (100) vorgesehen sind.

6. Erntegutrestehäcksel- und -verteilanordnung nach Anspruch 5, **dadurch gekennzeichnet, dass** die Wurfgebläse (100) mit ihren dem Strohhäcksler (60) zugewandten Seiten im Betrieb nach innen drehen.

7. Emtegutrestehäcksel- und -verteilanordnung nach einem der Ansprüche 1 bis 6,
**dadurch gekennzeichnet, dass** der Strohhäcksler (60) derart angeordnet ist, dass er das Wurfgebläse (100) im Betrieb in axialer Richtung unter einem Winkel (α) beaufschlagt.

8. Erntegutrestehäcksel- und -verteilanordnung nach einem der Ansprüche 1 bis 7,
**dadurch gekennzeichnet, dass** der Strohhäcksler (60) innerhalb eines Strohhäckslergehäuses (90) mit einem konkaven Boden (112) angeordnet ist, und dass zwischen dem Boden (112) des Strohhäckslergehäuses (90) und den Wurfgebläsen (100) ein sich flaches, den Erntegutstrom ablenkendes oder nicht ablenkendes Erntegutresteführungselement (122) positioniert ist.

9. Mähdrescher (10) mit einer Emtegutrestehäcksel- und -verteilanordnung nach einem der Ansprüche 1 bis 8.

## Claims

1. Crop residue chopping and distributing arrangement having a straw chopper (60) and at least one ejector blower (100) which is arranged downstream of the straw chopper (60) and comprises ejector paddles (102, 102') which can be set into rotation about an axis of rotation (108), **characterized in that** the ejector paddles (102, 102') each extend in the axial direction only over part of the axial dimension of the ejector blower (100), and **in that** adjacent ejector paddles (102, 102') which are angularly offset in the circumferential direction are each offset in the axial direction.

2. Crop residue chopping and distributing arrangement according to Claim 1, **characterized in that** the ejector paddles (102, 102') extend in the axial direction over at least approximately half of the axial dimension of the ejector blower (100).

3. Crop residue chopping and distributing arrangement according to Claim 1 or 2, **characterized in that** an axial end of each of the ejector paddles (102, 102') ends flush with the ejector blower (100).

4. Crop residue chopping and distributing arrangement according to one of Claims 1 to 3, **characterized in that** the ejector blower (100) is provided with a central shaft (139) which is adjoined in the radial direction by the ejector paddles (102, 102').

5. Crop residue chopping and distributing arrangement according to one of Claims 1 to 4, **characterized in that** two ejector blowers (100) arranged laterally next to each other and rotating in opposite directions are provided.

6. Crop residue chopping and distributing arrangement according to Claim 5, **characterized in that** those sides of the ejector blowers (100) which face the straw chopper (60) rotate inwards during operation.

7. Crop residue chopping and distributing arrangement according to one of Claims 1 to 6, **characterized in that** the straw chopper (60) is arranged such that it impinges on the ejector blower (100) at an angle (α) in the axial direction during operation.

8. Crop residue chopping and distributing arrangement according to one of Claims 1 to 7, **characterized in that** the straw chopper (60) is arranged within a straw chopper housing (90) with a concave base (112), and **in that** a flat crop residue guiding element (122) which deflects or does not deflect the crop stream is positioned between the base (112) of the straw chopper housing (90) and the ejector blowers (100).

9. Combine harvester (10) having a crop residue chopping and distributing arrangement according to one of Claims 1 to 8.

## Revendications

1. Agencement de hachage et de répartition de résidus de produits de récolte avec un broyeur de paille (60) et au moins une souffleuse à éjection (100) disposée en aval du broyeur de paille (60), qui comprend des palettes d'éjection (102, 102') mobiles en rotation autour d'un axe de rotation (108), **caractérisé en ce que** les palettes d'éjection (102, 102') s'étendent en direction axiale seulement à chaque fois sur une partie de la dimension axiale de la souffleuse à éjection (100), et **en ce que** des palettes d'éjection voisines (102, 102'), angulairement décalées dans la direction périphérique, sont disposées respectivement avec un décalage en direction axiale.

2. Agencement de hachage et de répartition de résidus de produits de récolte selon la revendication 1, **caractérisé en ce que** les palettes d'éjection (102, 102') s'étendent en direction axiale sur au moins approximativement la moitié de la dimension axiale de la souffleuse à éjection (100).

3. Agencement de hachage et de répartition de résidus de produits de récolte selon la revendication 1 ou 2, **caractérisé en ce qu'**une extrémité axiale des palettes d'éjection (102, 102') se termine à chaque fois à fleur de la souffleuse à éjection (100).

4. Agencement de hachage et de répartition de résidus de produits de récolte selon l'une quelconque des revendications 1 à 3, **caractérisé en ce que** la souffleuse à éjection (100) est équipée d'un arbre médian (139), auquel les palettes d'éjection (102, 102') se raccordent en direction radiale.

5. Agencement de hachage et de répartition de résidus de produits de récolte selon l'une quelconque des revendications 1 à 4, **caractérisé en ce qu'**il est prévu deux souffleuses à éjection (100) tournant en sens contraire, disposées latéralement l'une à côté de l'autre.

6. Agencement de hachage et de répartition de résidus de produits de récolte selon la revendication 5, **caractérisé en ce que** les souffleuses à éjection (100) tournent avec leurs côtés tournés vers le broyeur de paille (60) vers l'intérieur pendant le fonctionnement.

7. Agencement de hachage et de répartition de résidus de produits de récolte selon l'une quelconque des revendications 1 à 6, **caractérisé en ce que** le broyeur de paille (60) est disposé de telle manière qu'il alimente la souffleuse à éjection (100) sous un angle (α) en direction axiale pendant le fonctionnement.

8. Agencement de hachage et de répartition de résidus de produits de récolte selon l'une quelconque des revendications 1 à 7, **caractérisé en ce que** le broyeur de paille (60) est disposé à l'intérieur d'une enceinte de broyeur de paille (90) avec un fond concave (112), et **en ce qu'**un élément plat de guidage de résidus de produits de récolte (122), déviant ou ne déviant pas le flux de produits de récolte, est positionné entre le fond (112) de l'enceinte de broyeur de paille (90) et les souffleuses à éjection (100).

9. Moissonneuse-batteuse (10) avec un agencement de hachage et de répartition de résidus de produits de récolte selon l'une quelconque des revendications 1 à 8.
